# EUROPEAN PATENT SPECIFICATION

(11) **EP 2 522 927 B1**
(45) Date of publication and mention of the grant of the patent: **27.12.2017**
(21) Application number: 12382173.8
(22) Date of filing: 10.05.2012
(51) Int. Cl.: F24J 2/05, F24J 2/07, F24J 2/10, F24J 2/12, F24J 2/14, F24J 2/16, F24J 2/26, F24J 2/50, F24J 2/51, F24J 2/04, F24J 2/24

(54) **Solar thermal collector with transparent insulation**
Thermischer Sonnenkollektor mit transparenter Isolierung
Collecteur solaire thermique avec isolation transparente

(30) Priority: 02.04.2012 ES 201230504; 13.05.2011 ES 201130770
(43) Date of publication of application: 14.11.2012
(73) Proprietor: Termo Fluids, S.L., 08204 Sabadell (ES)
(72) Inventor: Lehmkuhk Barba, Oriol, 08204 SABADELL (ES); Colomer Rey, Guillem, 08204 SABADELL (ES); Castro Gonzales, Jesus, 08204 SABADELL (ES); Rodriguez Perez, Ivette, 08204 SABADELL (ES)
(74) Representative: Oficina Ponti, SLP

(56) References cited:
- EP-A1- 0 287 779
- EP-A1- 0 473 859
- WO-A1-93/23987
- WO-A1-99/20951
- DE-A1- 3 923 821
- DE-A1- 4 400 917
- DE-A1-102006 022 426
- JP-A- 2011 033 276

## Description

### Object of the Invention.

This invention refers to improvements in the insulation of solar thermal collectors, both in the case of low-medium temperature collectors as well as for high temperature collectors.

### State of the Art.

Solar thermal collectors are widely known in the market, and are generally divided into two large groups according to their working temperatures: the first includes low-medium temperature collectors (60-150°C.) used mainly in heating installations or sanitary hot water, whereas the second group includes collectors that work at high temperature (up to 600° C.) mainly used for industrial or electrical power generation installations, generally by steam cycles or combined cycle with steam turbines.

There are currently several configurations of collectors designed for different applications, among which we can highlight: flat solar collectors for working at low or medium temperature, and concentration collectors, working at high temperature, with all their variants of reflection or refraction of solar radiation, for instance with a parabolic cylinders reflectors or parabolic discs and with Fresnel lenses or mirrors. Other concentration collectors that are typical for high temperature are solar power tower systems. Solar thermal collectors are generally less efficient the greater their working temperature. I.e., the greater the temperature of the heat-bearing fluid which extracts the heat energy captured, the worse their performance. This is due to the fact that the greater the temperature of the heat-bearing fluid, and thus the entire collector, the greater the heat losses with the exterior, because the temperature difference between the surface of the collector and the ambient is greater.

Currently, to solve this problem, designers attempt to minimise heat losses in the collector by decreasing the transmission of heat simultaneously by conduction, convection and radiation between the hottest part, which is the absorber, and the exterior. To do this, several solutions have been applied, based mainly on insulating the absorbent surface from the exterior, using, when possible, opaque conventional insulation materials such as rockwool. However, any insulation between the absorbent surface and the sun must be transparent to solar rays, so they can be captured. The current state of the art in insulation systems used in flat solar collectors and concentration collectors will be described below.

The first insulation system, described by "Duffie, J. A. and Beckman, W. A.", in "Solar Engineering of Thermal Processes, John Wiley and Sons, Inc., 1991" consists in placing an air chamber between the absorber and the exterior confined by the absorber itself, the structure of the collector and a glass cover that is transparent to sunlight, but opaque to thermal radiation. This is an optimal solution for low temperatures (up to about 60° C.), at greater temperatures, the convection heat transfer coefficient in the air chamber is too high and the insulation becomes less effective, and therefore loses efficiency.

An attempt to solve this problem and thus avoid these loses by convection, may be to evacuate the air, so as to eliminate losses, creating a vacuum chamber, which only transfers heat by radiation. The main drawbacks of this are the degradation of the vacuum with time and the tensions generated by differences of pressure, which will require a high quality and costly manufacturing processes. This method is described in patents under publication number US 5182912 and US 4038964 titled "Fluid absorption receiver for solar radiation" and "Parabolic solar concentrator employing flat plate collector", respectively.

Lastly, the current strategy to minimise losses is to use transparent insulation materials also known as TIM (Transparent Insulation Materials). These are materials allow sunlight to pass while being at the same time good thermal insulators. Traditionally, TIM made of transparent polymer film or glass has been used. This film is shaped in a honeycomb-like structure (honeycomb). In this manner, a structure is created that does not let air circulate and thus becomes a good insulator. This type of material is used in Patent number ES2273534 titled "Transparent insulation cover for solar thermal applications ", and also in Patent number US4432346 titled "Solar collector". Nevertheless, their disadvantage, when they are layers of polymeric type, is a limited resistance to temperature, up to a maximum of about 140ªC, which may be reached in the collector in the most unfavourable conditions. One of these most unfavourable conditions is referred to as "stagnation conditions" originated when stagnation (non-circulation) of the heat-bearing fluid coincides with a situation of maximum solar rays. On the other hand, honeycomb structures are also made of glass, which although very resistant to temperature (400-500ºC), their principal drawback is an excessive final price and weight. In addition to these two types, there is another type of TIM also used exclusively in flat collectors and in a single transparent insulation layer, although this is only available at a pre-commercial academic level, described by Nordgaard, A. and Beckman, W. A. in a publication titled: "Modelling of flat plate collectors based on monolithic silica aerogel". This is silica aerogel or xerogel (depending on the manufacturing method), a material with much greater resistance to high temperature (up to 500-600°C) than polymers, although somewhat limited in transmission of solar rays. In their favour, they present very high thermal insulation properties and low density. However, this material is quite expensive, less so in the case of the silica xerogel, although offering lower quality properties. Silica aerogel or silica xerogel, obtained by different manufacturing processes, is presented in monolithic or granular state, depending on the manufacturing method. Hereinafter, in the present document will refer to silica aerogel or silica xerogel indistinctly, as a single material; silica aerogel.

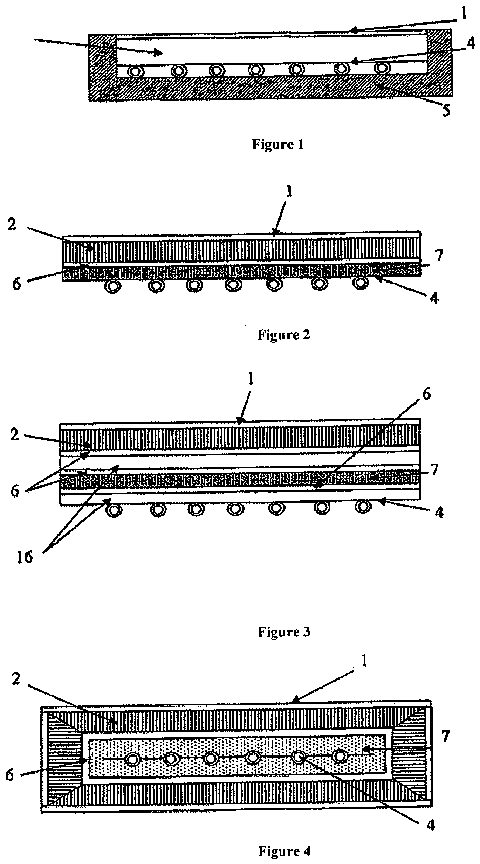

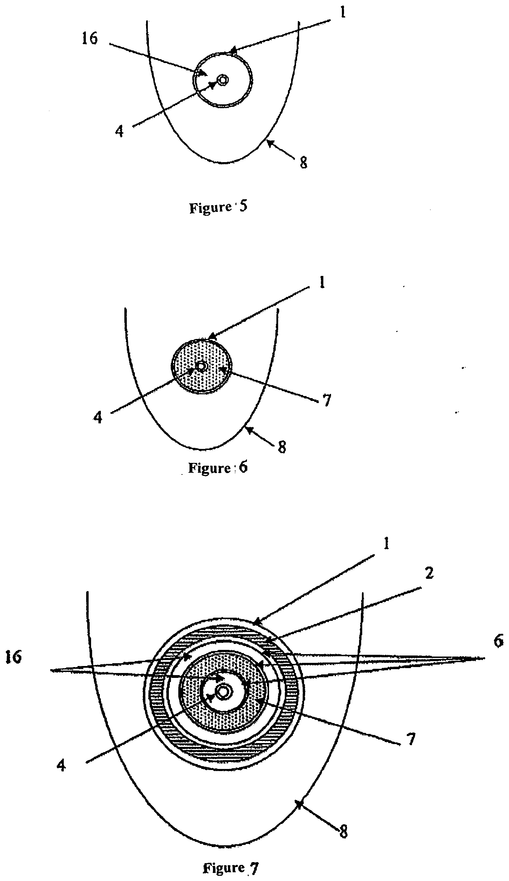

The International Patent Application WO 99/20951 discloses a flat solar thermal collector with transparent insulation, used to capture solar energy and transform it into heat energy, formed by an absorber, a transparent exterior cover and transparent thermal insulating material between the exterior transparent cover and the absorber, wherein transparent thermal insulating could be a transparent sheet, a honeycomb, silica aerogel or plastic material. The collector includes only one of said layers but this layer does not necessarily have to be in contact with the chamber upper surface. WO 99/20951 discloses therefore the preamble of independent claim 1. In the specific case of flat solar collectors (see diagram in Figure 1), these have of a selective capturing surface (which absorbs a large amount of solar radiation and emits little radiated heat) known as an absorber, absorbing the solar energy and transmitting it to the heat-bearing fluid. With the aim of improving performance, the absorber is insulated on the covered part with an air chamber, vacuum chamber or transparent insulation material, while conventional insulation materials are used for the sides and in the back. In the case of concentration collectors with parabolic cylinders, they consist basically, as seen in Figure 5, of a reflective-concentric parabola, which sends the solar rays to an absorbent surface in contact with the heat-bearing fluid, so that much higher temperatures can be reached than in the case of flat collectors. In existing cylindrical-parabolic concentration collectors, the absorbent surface is insulated from the outside by an air or vacuum chamber. This chamber is in the space between the absorbent surface and an exterior pane of glass. Concentration collectors with linear Fresnel reflectors are similar to cylinder-parabolic collectors. In this case the difference resides in the system of concentration, as a series of linear Fresnel reflectors are used instead of a parabolic cylinder reflector.

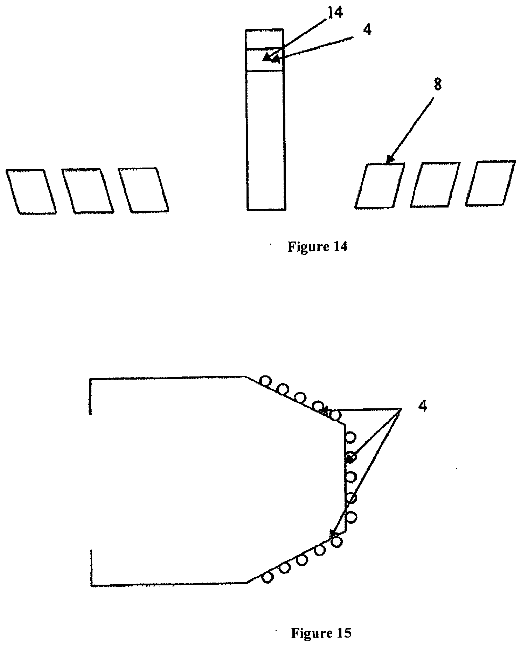

There is another high temperature solar heat collector technology: solar power towers. In this case, mirrors or heliostats reflect and focus sunlight towards a window or aperture in a reception recess located at height (collector tower) in which the absorbent surface is located. This absorbent surface is attached to the circuit through which the heat-bearing fluid flows (see Figures 14 and 15). This technology is described for instance in Patent US4546758.

In short, current solar thermal collectors present different configurations to increase efficiency by reducing heat losses. However, there are a series of problems in the insulation methods which makes these units either inefficient or expensive and/or heavy.

### Scope of the Invention:

The present invention aims to improve solar thermal collectors, which absorb solar energy and convert it into heat at low, medium and high temperatures, increasing efficiency and minimising production costs and weight.

More specifically, it refers to the use of transparent thermal insulating material in two or more layers for medium-low temperature thermal collectors, flat collectors and of at least one layer in high temperature solar collectors, including in the latter, concentration collectors, central reception systems and receivers with a Stirling motor incorporated.

Additionally, another of the purposes of the invention, as described in Additional patent no. 201230504/0, is that of changing the configuration of the absorbent layer in order to improve the performance in the purpose of the main Patent no. 201130770.

### Description of the Invention.

Solar thermal collectors referred to in the present invention have a transparent exterior cover, formed total or partially by glass, quartz or transparent polymeric material, offering protection from the elements. The inner side of this transparent exterior cover contains the absorber as the core collector, thermally insulated from the rest of the components by layers of transparent insulation material (TIM), always including silica aerogel and generally including at least one of the following layers: transparent insulating material with a honeycomb structure, an air or vacuum chamber or a combination of them, depending on the configuration of the solar thermal collector, these layers may be separated by transparent separators such transparent polymeric film, plate glass or a plate of transparent quartz. More specifically, in the case of flat solar collectors, they are confined in a rectangular geometric structure with flat surfaces, in which at least one of these is transparent, this structure having less thickness than the rest of the geometric vectors that it is comprised of. Inside this structure, the central element is the absorber, which is a plate, normally made of metal, with a selective surface and with tubes welded to it through which the heat-bearing fluid flows, although alternatively other configurations in which the heat-bearing fluid flows attached to the absorbent surface are admissible (e. g. tubes working at a pressure). This absorber is separated from the exterior cover by at least two layers, of which at least one will be made of transparent insulating material such as silica aerogel or similar, whereas the other layers are formed by an air or vacuum chamber, transparent polymer film or glass with a honeycomb structure or a combination of these elements. In this way, the assembly forms a flat solar collector with transparent multi-layer insulation between the absorber and the cover.

In the case of concentration collectors, the absorber may consist typically of a tube, if it is a parabolic or linear Fresnel reflector cylinder concentrator, or in an absorbent surface called central receiver or a receiver to which a Stirling generator is fitted. In any case, the absorber has a selective surface on which the circuit through which the heat-bearing fluid is attached and it is covered by at least one layer of transparent insulating material of silica aerogel or similar type, which may be separated or not from the absorber itself, by an air or vacuum chamber. The element that focuses the sunlight onto the absorber in concentration collectors may have different configurations such as parabolic discs and cylinders, flat mirrors, Fresnel lenses or similar methods.

Other details and features will be detailed in the description given below, which illustrate several examples of the invention shown for illustrative but not limiting purposes, with the help of the corresponding Drawings.

Below is a list of the different parts of the invention, which are indicated in the following drawings with their respective numbers; (1) transparent cover, (2) honeycomb transparent insulation material layer made of glass or transparent polymer, (3) air chamber, (4) absorber, (5) opaque conventional thermal insulation, (6) transparent separator, (7) monolithic or granular transparent silica aerogel, (8) concentrator member, (9) vacuum chamber, (10) flat solar collector, (11) concentration solar collector, (12) Stirling motor, (13) solar power tower, (14) tower solar receiver, (15) standard confinement structure of the transparent insulating material, (16) air or vacuum confinement space, (17) insulating coating material.

### Description of the Drawings.

Figure 1 is a schematic representation of a flat solar collector (10), according to the state of the art, where the confinement structure (15) is composed of one of the following insulation elements: a layer of honeycomb-shaped transparent insulation material (2), an air chamber (3), transparent silica aerogel (7) or a vacuum chamber (9).
Figure 2 is a schematic representation of the flat solar collector cover (10) using silica aerogel insulation (7) and transparent honeycomb structure insulation (2) on the cover.
Figure 3 is a schematic representation of the flat solar collector cover (10) using silica aerogel insulation (7), transparent honeycomb structure insulation (2) and at least an air or vacuum confinement space, (16), composed of an intermediate air (3) or vacuum (9) chamber(s) on the cover.
Figure 4 is a schematic representation of a flat solar collector (10) using silica aerogel insulation (7) and transparent honeycomb structure insulation (2) on the cover, sides and back.
Figure 5 is a schematic representation of a solar concentration collector (11) with a parabolic cylinder reflector (8), according to the state of the art, comprising an air or vacuum confinement space (16), composed of an air (3) or vacuum (9) chamber.
Figure 6 is a schematic representation of a solar concentration collector (11) with parabolic cylinder reflector (8) using silica aerogel insulation (7).
Figure 7 is a schematic representation of a solar concentration collector (11) with a parabolic cylinder reflector (8) using silica aerogel insulation (7), transparent honeycomb structure insulation (2) and at least an air or vacuum confinement space (16), composed of an intermediate air (3) or vacuum (9) chamber.

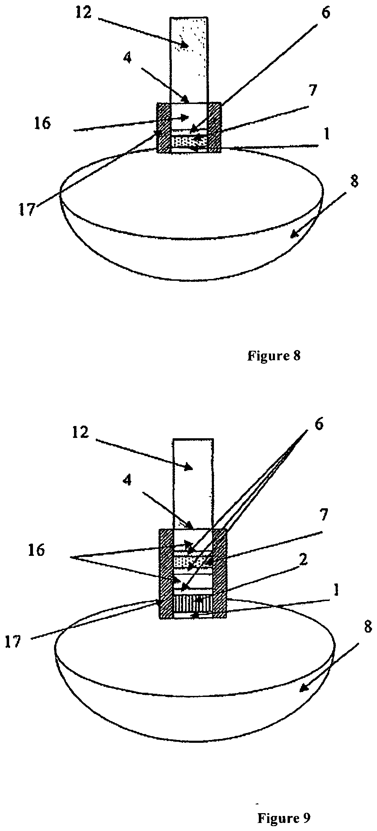

Figure 8 is a schematic representation of a solar concentration collector (11) with a plate-parabolic shaped reflective element (8), incorporating a Stirling type motor (12) and silica aerogel insulation (7), an air or vacuum confinement space (16), comprising an intermediate air (3) or vacuum (9) chamber and an insulating coating material (5) either opaque (17) or transparent (7) silica aerogel.
Figure 9 is a schematic representation of a solar concentration collector (11) with a plate-parabolic shaped reflective element (8), incorporating a Stirling type motor (12) and silica aerogel insulation (7), transparent honeycomb structure insulation (2), at least an air or vacuum confinement space (16), comprising an intermediate air (3) or vacuum (9) chamber and an insulating coating material (17) either opaque (5) or transparent (7) silica aerogel.

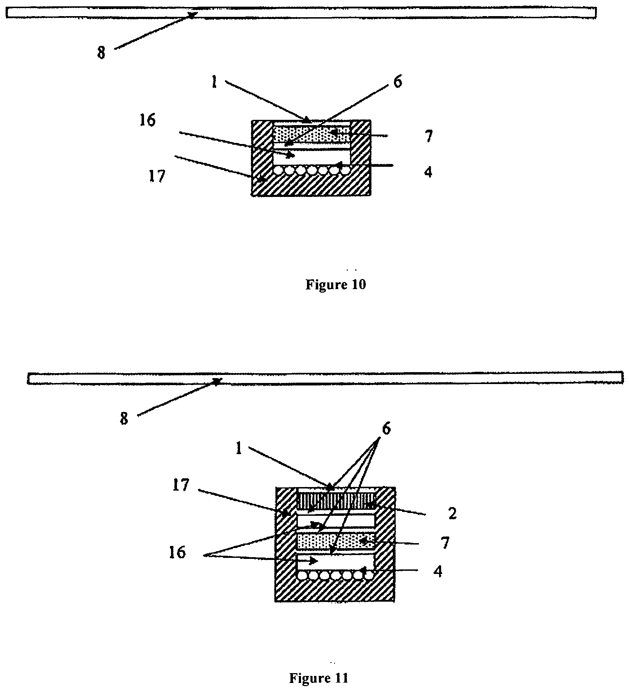

Figure 10 is a schematic representation of a solar concentration collector (11) with a Fresnel lens as a concentrator member (8) and a square or rectangular shaped absorber member (4) with passageways or channels through which the heat-bearing fluid flows, silica aerogel insulation (7), an air or vacuum confinement space (16), composed of an intermediate air (3) or vacuum (9) chamber and a insulating coating material (17), either opaque (5), or transparent (7) silica aerogel.
Figure 11 is a schematic representation of a solar concentration collector (11) with a Fresnel lens as a concentrator member (8) and a square or rectangular shaped absorber member (4) with passageways or channels through which the heat-bearing fluid flows, silica aerogel insulation (7), transparent honeycomb structure insulation (2), at least an air or vacuum confinement space (16), composed of an intermediate air (3) or vacuum (9) chamber and a insulating coating material (17), either opaque (5), or transparent (7) silica aerogel.

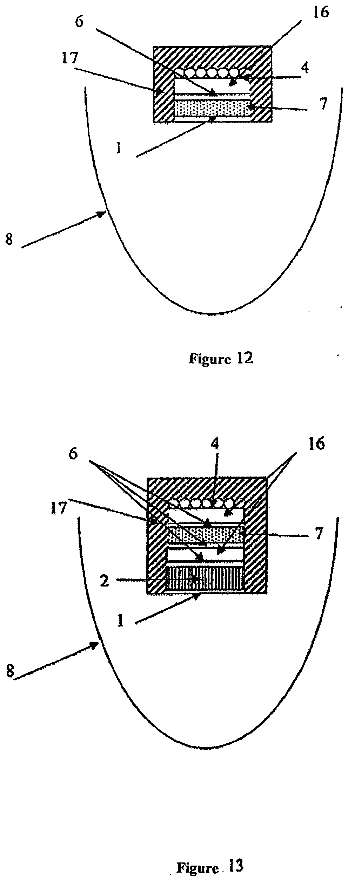

Figure 12 is a schematic representation of a solar concentration collector (11) with a parabolic cylinder reflector as a concentrator member (8) and a square or rectangular shaped absorber member (4) with passageways or channels through which the heat-bearing fluid flows, silica aerogel insulation (7), an air or vacuum confinement space (16), composed of an intermediate air (3) or vacuum (9) chamber and a insulating coating material (17), either opaque (5), or transparent (7) silica aerogel.
Figure 13 is a schematic representation of a solar concentration collector (11) with a parabolic cylinder reflector as a concentrator member (8) and a square or rectangular shaped absorber member (4) with passageways or channels through which the heat-bearing fluid flows, silica aerogel insulation (7), transparent honeycomb structure insulation (2), at least an air or vacuum confinement space (16), composed of an intermediate air (3) or vacuum (9) chamber and a insulating coating material (17), either opaque (5), or transparent (7) silica aerogel.
Figure 14 is a schematic representation of a solar power tower (13), with a reception cavity (14) and heliostats (8), according to the state of the art.
Figure 15 is a schematic representation of the plan of the reception cavity (14) in a solar power tower (13), with an absorbent area (4) with tubes attached, through which the heat-bearing fluid flows.

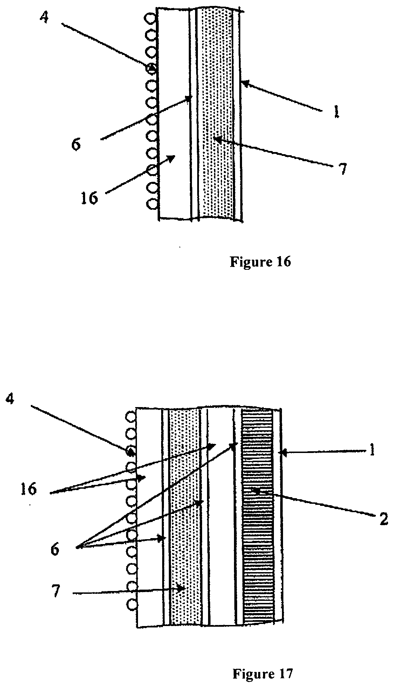

Figure 16 is a schematic representation of the reception cavity area (14) in a solar power tower (13) using silica aerogel insulation (7) and an air or vacuum confinement space (16), composed of an intermediate air (3) or vacuum (9) chamber.
Figure 17 is a schematic representation of the surface of the reception cavity (14) in a solar power tower (13), using silica aerogel insulation (7), transparent honeycomb structure insulation (2) and at least an air or vacuum confinement space (16), composed of an intermediate air (3) or vacuum (9) chamber.

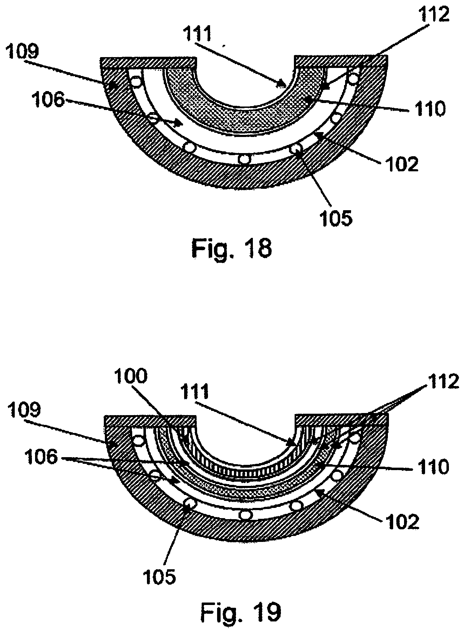

Figure 18 is a schematic representation of a concave absorber (102) for a solar concentration collector (103) with a Fresnel lens as a concentrator member (104). This absorber (102) has passageways or channels through which the heat-bearing (105) fluid flows, silica aerogel insulation (110), an intermediate air or vacuum confinement space (106), and an opaque insulating coating material (109) or transparent silica aerogel (110).
Figure 19 is a schematic representation of a concave absorber (102) for a solar concentration collector (103) with a Fresnel lens as a concentrator member (104). This absorber (102) has passageways or channels through which the heat-bearing (105) fluid flows, silica aerogel insulation (110), with transparent honeycomb structure insulation (100) and at least an intermediate air or vacuum confinement space (106), and an opaque insulating coating material (109) or transparent silica aerogel (110).

### Description of preferred embodiments of the invention.

A preferred embodiment of this invention. One of preferred embodiments of the present invention for flat solar collectors (10) is within a standard confinement structure (15), the sides and in the back with opaque materials (5) and the top (1) with a transparent glass cover (1), with multi-layer insulation between the cover (1) and the absorber (4), which has two transparent insulation layers. The first layer, closest to the absorber (4), is monolithic type transparent silica aerogel (7), and the closest to the glass of the cover (1) is honeycomb-like transparent insulation material (2), as can be seen in Figure 2, transparent separators (6) may be optionally included. This arrangement is not arbitrary, as the transparent silica aerogel (7) is more resistant to temperature than the transparent honeycomb structure insulation material (2); therefore it is located closer to the hotter area of the collector, close to the absorber (4). Whereas the rest of the sides of the standard absorber (4) structure are insulated with common opaque insulation (5), such as rockwool or similar material. Thus a flat solar collector (10) is obtained with a better resistance to high temperatures, better performance and lower production cost than collectors of similar efficiency.

Alternatively, this same collector (10) configuration may use granular transparent silica aerogel (7) instead of the monolithic type, confined within a glass layer or transparent polymer separator (6), such as polycarbonate or the like. The honeycomb transparent insulation layer (2) is located closer to the transparent glass cover (1), keeping the structure (2) at a lower temperature.

The thickness of each insulation layer (2, 7) will be determined according to final price-performance specifications. Due to the greater cost of transparent silica aerogel (7) compared to the honeycomb insulation structure (2), the later (2) will be thicker than silica (7) in common solar collectors (10), with the possibility of varying this to obtain greater performance. In this way, it is possible to obtain a wide range of flat solar collectors (10) with greater performance than currently existing ones and with variable production costs, only correcting the thickness of the layers (2, 7) without making great changes in the process or manufacturing machinery.

In another of the preferred embodiments of the flat collector (10), an air or vacuum confinement space (16), consisting of an air (3) or vacuum (9) chamber, is designed between the absorber (4) and the transparent silica aerogel layer (7), and/or between the transparent silica aerogel layer (7) and the honeycomb-shaped transparent insulation material (2). If the transparent silica aerogel (7) is of the granular type, the air or vacuum confinement space (16), consisting of an air (3) or vacuum (9) chamber, will be separated from the transparent silica aerogel (7) with a transparent separator (6) formed by a transparent material film or glass. Optionally, the air or vacuum confinement space (16), consisting of an air (3) or vacuum (9) chamber, will be separated from the transparent insulation honeycomb structure material (2) by other transparent separator film (6) or glass, as can be seen in Figure 3, thus protecting the transparent silica aerogel (7) and/or transparent honeycomb polymer (2) in case of stagnation of the heat-bearing fluid. Alternatively to the preferred embodiment described in the above paragraph of the flat collector (10) type, it is optionally possible to replace the opaque (5) rockwool type or similar insulation of the sides and back of the collector by any of the configurations of multi-layer transparent insulation described above. An example of this type of configuration can be seen in Figure 4, where you can see a configuration composed of the silica aerogel insulation (7) surrounding the absorber (4) and these (4, 7) in turn surrounded by a polymer layer or transparent glass acting as a separator (6) and all confined by a glass or similar cover (1). In this way, a gain of solar energy on all sides is achieved, especially due to the diffuse radiation, increasing the energy capturing of the flat solar collector (10). Optionally, in all the above configurations the transparent glass cover (1) may be replaced by transparent polymer of similar characteristics to the transparent glass cover (1), which is ideal for working temperature of the flat solar collector (10).

In another of the preferred embodiments, the configuration of the solar concentration collector (11), which includes cylindrical-parabolic, plate-parabolic and similar models, and models with linear Fresnel reflectors. The embodiment consist of adding a layer of transparent insulation material of the granular or monolithic type silica aerogel (7) between the tube forming the transparent cover (1), made of glass, quartz or transparent polymeric material, and the absorber (4). Figure 6 is a simplified illustration of a cylindrical-parabolic concentration collector (11), in one of the most common embodiments of concentration collector (11) which includes, as discussed above, a transparent monolithic or granular silica aerogel layer (7) around the tubular absorber (4), which is confined in the glass or transparent polymeric material cover (1), in a tube shape. Because of its reflective and thermal properties, along with a high resistance to temperature (500-600°C), transparent silica aerogel (7) material is highly appropriate for these collectors (11), as they work at very high temperatures but typically lower than the resistance limit of the material (7). Therefore, it is possible to make more efficient collectors (11) by reducing thermal losses, and thus reducing production and maintenance costs in comparison to other technologies.

Alternatively, the aforementioned preferred embodiment may include an air or vacuum confinement space (16), consisting of an air (3) or vacuum (9) chamber between the absorbent tubular surface (4) and the transparent silica aerogel insulating material (7) in order to protect this layer (7) from possible overheating in case of very high temperature applications. Figure 7 shows an example of a concentration collector (11), with a transparent silica aerogel layer (7) and the confinement space (16) between the absorber (4) and the silica aerogel (7). Also, as an as alternative, Figure 7 shows an additional layer of transparent honeycomb insulating material (2), confined between the glass cylinder, quartz or transparent polymeric material of the cover (1), and another cylinder separator (6) which separates it from a second more exterior confinement space (16). Between this second confinement space (16) and the silica aerogel layer (7) there would be another transparent separator (6). This additional layer of transparent honeycomb insulating material (2) may be optionally added so as to achieve good thermal insulation. In this way, with multi-layer insulation, one can use less transparent silica aerogel (7) in the more internal layer.

In another of the preferred embodiments, a concentration collector (11) with a parabolic plate (8) as a concentrator member, in which the absorber (4) does not receive the solar radiation from all sides, but which has a cylinder shape in which only the end points to or which the plate-parabolic (8) is pointed to, receives the solar radiation, the rest of the sides being insulated (17) with opaque (5) or transparent (7) coatings and confined within a rigid encapsulating element. A very interesting energy application for areas isolated from the electrical grid, as shown in Figures 8 and 9, is the application of this last embodiment of concentration collector (11) together with a Stirling type motor (12), which can operate up to over 600°C, so that the absorbent surface (4) is the hot point for the motor and it is integrated into the so-called solar receiver. The solar receiver conists of a multi-layer structure formed by a glass, transparent polymeric material or quartz cover (1), which closes the front and which is pointed to or to which the plate points (8), another transparent silica aerogel layer (7), followed this (7) by a transparent glass or quartz separator (6), an air or vacuum confinement space (16), consisting of an air (3) or vacuum (9) chamber and finally the absorber (4) (see Figure 8).

Alternatively to the preferred embodiment mentioned above, the multi-layer structure may be improved with air chambers (3) and an additional transparent honeycomb material layer (2). In this manner, the transparent multi-layer insulation is composed of a glass, polymeric material or transparent quartz cover (1) which closes the front, which is pointed to or to which the plate (8) points, another transparent honeycomb material layer (2), a transparent separator (6), an air or vacuum confinement space (16), consisting of an air (3) or vacuum (9) chamber, a transparent separator (6), another layer of transparent silica aerogel (7), followed this (7) by a separator (6) and an air or vacuum confinement space (16), consisting of an air (3) or vacuum (9) chamber and finally the absorber (4) (see Figure 9). In this case, the mentioned confinement space (16) is especially recommendable, consisting of an air (3) or vacuum (9) chamber for protecting the transparent silica aerogel (7) from excess temperature.

Another of the preferred embodiments is a solar concentration collector (11) with a Fresnel lens as a concentrator member (8). In this case the absorber (4) consists of a square or rectangular shaped selective reception surface, which transfers the energy to the heat-bearing fluid which flows through small section tubes or conduits, which may be only a few square millimetres to square nanometres and are in contact with the reception surface. In this case the transparent insulation would consist of a glass, transparent polymeric material or quartz cover (1), which closes the front, pointing towards the concentrator member (8), another transparent silica aerogel layer (7), followed this (7) by a transparent glass or quartz separator (6) and an air or vacuum confinement space (16), consisting of an air (3) or vacuum (9) chamber and finally the absorber (4) (see Figure 10). All encapsulated in a structure thermally insulated on the sides with insulating material (17), which may be an opaque conventional insulation coating (5) or silica aerogel (7) coating.

An alternative to the preferred embodiment described above is a solar concentration collector (11) with a Fresnel lens as a concentrator member (8). In this case the absorber (4) also consists of a square or rectangular shaped selective reception surface, which transfers the energy to the heat-bearing fluid which flows through small section tubes or conduits, which may be only a few square millimetres to square nanometres and are in contact with the reception surface. In this case, the multi-layer transparent insulation consists of a glass, transparent polymeric material or quartz cover (1), which closes the front and points towards the concentrator member (8), another transparent honeycomb structure material layer (2), a glass, quartz or polymer layer forming a transparent separator (6), an air or vacuum confinement space (16), consisting of an air (3) or vacuum (9) chamber, a transparent separator layer (6), another transparent silica aerogel layer (7), followed this (7) by a transparent glass or quartz separator (6), and an air or vacuum confinement space (16), consisting of an air (3) or vacuum (9) chamber and finally the absorber (4) (see Figure 11). All also encapsulated in a structure thermally insulated on the sides with insulating material (17), which may be an opaque conventional insulation coating (5) or silica aerogel (7) coating.

A variant of the last two preferred embodiments is a cylindrical-parabolic (8) or plate-parabolic concentrator (8) (see Figure 12). The structure of the square or rectangular shaped absorber (4) is also a selective reception surface, in contact-with small section tubes or conduits, from a few square millimetres to square nanometres, in contact-with the receptive surface, which transfers the heat energy to the heat-bearing fluid. The multi-layer insulation would consist of a glass, polymeric transparent material or transparent quartz cover (1) closing the front, which faces or the concentrator member or to which the concentrator member (8) faces, another transparent silica aerogel layer (7), followed this (7) by a transparent glass or quartz separator (6) and an air or vacuum confinement space (16), consisting of an air (3) or vacuum (9) chamber and finally the absorber (4) (see Figure 12). All encapsulated in a structure thermally insulated on the sides with insulating material (17), which may be an opaque conventional coating (5) or silica aerogel (7) coating.

An alternative to the aforementioned preferred embodiment is a solar concentration collector (11) with a parabolic cylinder or parabolic plate as a concentrator member (8). In this case the absorber (4) also consists of a square or rectangular shaped selective reception surface, which transfers the energy to the heat-bearing fluid which flows through small section tubes or conduits, which may be only a few square millimetres to square nanometres and are in contact with the reception surface. In this case the transparent multi-layer insulation consists of a glass or transparent quartz cover (1), that closes the front, which points to the concentrator member or which the concentrator member (8) is faced, another honeycomb structure transparent material layer (2), a glass, quartz or transparent polymer separator layer (6), an air or vacuum confinement space (16), consisting of an air (3) or vacuum (9) chamber, a glass, quartz or transparent polymer separator layer (6), another transparent silica aerogel layer (7), followed this (7) by a transparent glass or quartz separator (6), another air or vacuum confinement space (16), consisting of an air (3) or vacuum (9) chamber and finally the absorber (4) (see Figure 13). All also encapsulated in a structure thermally insulated on the sides with insulating material (17), which may be an opaque conventional coating (5) or silica aerogel (7) coating.

Another preferred embodiment is to apply the multi-layer insulation at the reception cavity (14) of a solar power tower (13) (see Figures 14, 15, 16). The transparent multi-layer insulation would consist of a glass, quartz or transparent polymeric material cover (1) closing the outside, which points to or to which the heliostats (8) are facing, another transparent silica aerogel layer (7), followed this (7) by a transparent glass or quartz separator (6) and an air or vacuum confinement space (16), consisting of an air (3) or vacuum (9) chamber and finally the absorber (4).

As a variant to the aforementioned preferred embodiment, we can also apply the concept of multi-layer insulation at the reception cavity (14) of a solar power tower (13) (see Figures 14, 15 and 17). In this case, the multi-layer transparent insulation consists of a glass, quartz or transparent polymeric material cover (1), which closes the front and points towards the heliostats (8), another transparent honeycomb structure material layer (2), a glass, quartz or polymer transparent separator layer (6), an air or vacuum confinement space (16), consisting of an air (3) or vacuum (9) chamber, a glass, quartz or transparent polymer separator layer (6), another transparent silica aerogel layer (7), followed this (7) by a transparent glass or quartz separator (6), an air or vacuum confinement space (16), consisting of an air (3) or vacuum (9) chamber, and and finally the absorber (4).

As described in Additional Patent no. 201230504.0, and as can be seen in Figure 18, the solar collector comprises one of the possible embodiments contemplated from outside to inside, an exterior coating (110) which follows the perimeter of said concave collector, covering an absorber (102), which has some tubes or passageways attached to it (105). The absorber (102) is surrounded by an air or vacuum confinement space (106).

The confinement space (106) is covered with transparent silica aerogel (111), placing a transparent separator element (112) between the confinement space (106) and the silica aerogel (111), which has a transparent cover on its upper part (111).

In another alternative embodiment, as may be seen in Figure 19, the solar collector comprises, from outside to inside, an exterior transparent insulating material coating (110), which follows the perimeter of said concave collector, and also that covers the upper part of the collector.

In turn, the coating (110) is covered on its inside with the absorber (102), which has the channels attached to it (106). The absorber (102) is surrounded by an air or vacuum confinement space (106) with the transparent silica aerogel (111) placed above this space (106) and between these (106) and (111) is a separator element (112), and above the transparent silica aerogel (111) there is another separator element (112), covered by the honeycomb structure transparent insulation (100), and finally covering the insulation (100) there is a transparent cover (111).

## Claims

1. **SOLAR THERMAL COLLECTOR WITH TRANSPARENT INSULATION,** used to capture solar energy and transform it into heat energy, working at low-medium or high temperature and formed principally by an absorber (4), a transparent exterior cover (1) and transparent thermal insulating material between the exterior transparent cover (1) and the absorber (4), **characterised in that** the transparent thermal insulation comprises at least the following layers:
- a transparent silica aerogel layer (7) closest to the absorber (4); and
- a transparent honeycomb structure insulation material layer (2) made of glass or transparent polymer, closest to the cover (1).

2. **SOLAR THERMAL COLLECTOR WITH TRANSPARENT INSULATION,** according to the claim 1, **characterised in that** the solar thermal collector is a flat solar collector (10) .

3. **SOLAR THERMAL COLLECTOR WITH TRANSPARENT INSULATION,** according to the claim 1, **characterised in that** the solar thermal collector is a concentration solar collector (11).

4. **SOLAR THERMAL COLLECTOR WITH TRANSPARENT INSULATION,** according to the previous claims, **characterised in that** between the two transparent thermal insulation layers is placed an air or vacuum confinement space (16), consisting of an air (3) or vacuum (9) chamber, separated (16) from the transparent insulation material (2) by a transparent separator (6), although the aforementioned layer is not necessary if the silica aerogel layer (7) is a monolithic type.

5. **SOLAR THERMAL COLLECTOR WITH TRANSPARENT INSULATION,** according to the claim 1, **characterised in that** the honeycomb structure of the layer made of the aforementioned transparent insulating material (2) has a low content of transparent honeycomb structure insulating material, made of glass or transparent polymer with a fraction in volume of material equals or less than 1%.

6. **SOLAR THERMAL COLLECTOR WITH TRANSPARENT INSULATION,** according to the claim 3 **characterised in that** the transparent thermal insulation is applied to the reception cavity (14) of a solar power tower (13).

7. **SOLAR THERMAL COLLECTOR WITH TRANSPARENT INSULATION,** according to the previous claims 1, 4, 5 and 6, **characterised in that** the thermal insulating materials, transparent silica aerogel (7), honeycomb structure transparent insulation material (2) and air or vacuum confinement spaces (16), have sufficient thickness to avoid each type of material reaching the maximum admissible working temperature in stagnation conditions, the transparent silica aerogel (7) resisting higher temperatures than the honeycomb structure transparent material (2).

8. **SOLAR THERMAL COLLECTOR WITH TRANSPARENT INSULATION,** according to the previous claims, **characterised in that** the sides and in the back of the collector are insulated with opaque layers (5), and these opaque layers can be replaced by layers of silica aerogel material (7).

9. **"SOLAR THERMAL COLLECTOR WITH TRANSPARENT INSULATION",** according to the previous claims 1, 4 and 7, **characterised in that** the silica aerogel layer (7) may be of silica aerogel or silica xerogel material, both transparent, and presented in granular or monolithic form.

10. **"SOLAR THERMAL COLLECTOR WITH TRANSPARENT INSULATION",** according to the claim 9, **characterised in that** when the insulation layer of transparent silica aerogel or silica xerogel (7) is in granular form, there will be one or more separator layers above and/or below this (7) transparent separator (6).

## Patentansprüche

1. Thermischer Solarkollektor mit transparenter Isolierung, der dazu verwendet wird, Solarenergie einzufangen und in Wärmeenergie umzuwandeln, der bei niedriger bis mittlerer oder hoher Temperatur arbeitet und hauptsächlich durch einen Absorber (4), eine transparente Außenabdeckung (1) und ein transparentes wärmeisolierendes Material zwischen der transparenten Außenabdeckung (1) und dem Absorber (4) gebildet ist, **dadurch gekennzeichnet, dass** die transparente Wärmeisolierung zumindest die folgenden Schichten aufweist:
eine transparente Schicht aus porösem Kieselgel (7), die sich am nächsten bei dem Absorber (4) befindet; und
eine transparente Schicht aus Isolierungsmaterial einer Wabenstruktur (2), die aus Glas oder transparentem Polymer hergestellt ist und sich am nächsten bei der Abdeckung (1) befindet.

2. Thermischer Solarkollektor mit transparenter Isolierung gemäß Anspruch 1, **dadurch gekennzeichnet, dass** der thermische Solarkollektor ein flacher Solarkollektor (10) ist.

3. Thermischer Solarkollektor mit transparenter Isolierung gemäß Anspruch 1, **dadurch gekennzeichnet, dass** der thermische Solarkollektor ein Konzentrationssolarkollektor (11) ist.

4. Thermischer Solarkollektor mit transparenter Isolierung gemäß einem der vorherigen Ansprüche, **dadurch gekennzeichnet, dass** zwischen den zwei transparenten Wärmeisolierungsschichten ein Luft- oder Vakuumeinschlussraum (16) platziert ist, der aus einer Luft(3)- oder Vakuum(9)-Kammer besteht, die von dem transparenten Isolierungsmaterial (2) durch einen transparenten Separator (6) getrennt ist, obwohl die zuvor erwähnte Schicht nicht notwendig ist, falls die Schicht aus porösem Kieselgel (7) ein monolithischer Typ ist.

5. Thermischer Solarkollektor mit transparenter Isolierung gemäß Anspruch 1, **dadurch gekennzeichnet, dass** die Wabenstruktur der aus dem zuvor erwähnten transparenten Isolierungsmaterial (2) hergestellten Schicht einen geringen Anteil an transparentem Isolierungsmaterial der Wabenstruktur aufweist, das aus Glas oder transparentem Polymer hergestellt ist, wobei ein Volumenanteil an Material 1 % oder weniger beträgt.

6. Thermischer Solarkollektor mit transparenter Isolierung gemäß Anspruch 3, **dadurch gekennzeichnet, dass** die transparente Wärmeisolierung auf den Aufnahmehohlraum (14) eines Solarturmkraftwerks (13) aufgebracht ist.

7. Thermischer Solarkollektor mit transparenter Isolierung gemäß einem der vorherigen Ansprüche 1, 4, 5 und 6, **dadurch gekennzeichnet, dass** die Wärmeisolierungsmaterialien, das transparente poröse Kieselgel (7), das transparente Wabenstruktur-Isolierungsmaterial (2) und die Luft- oder Vakuumeinschlussräume (16) eine ausreichende Dicke aufweisen, um zu vermeiden, dass jede Art von Material unter Stagnationsbedingungen die maximal zulässige Arbeitstemperatur erreicht, wobei das transparente poröse Kieselgel (7) höheren Temperaturen standhält als das transparente Wabenstruktur-Material (2).

8. Thermischer Solarkollektor mit transparenter Isolierung gemäß den vorherigen Ansprüchen, **dadurch gekennzeichnet, dass** die Seiten und der Rückteil des Kollektors mit lichtundurchlässigen Schichten (5) isoliert sind und dass diese lichtundurchlässigen Schichten durch Schichten aus einem Material porösen Kieselgels (7) ersetzt werden können.

9. Thermischer Solarkollektor mit transparenter Isolierung gemäß den vorherigen Ansprüchen 1, 4 und 7, **dadurch gekennzeichnet, dass** die Schicht aus porösem Kieselgel (7) aus einem Material aus porösem Kieselgel oder einem Kieselxerogel-Material bestehen kann, die beide transparent sind und in körniger oder monolithischer Form vorliegen.

10. Thermischer Solarkollektor mit transparenter Isolierung gemäß Anspruch 9, **dadurch gekennzeichnet, dass** dann, wenn die Isolierungsschicht aus transparentem porösem Kieselgel oder Kieselxerogel (7) in körniger Form vorliegt, über und/oder unter diesem (7) transparenten Separator (6) eine oder mehrere Separatorschichten vorliegen.

## Revendications

1. **CAPTEUR THERMIQUE SOLAIRE AVEC ISOLATION TRANSPARENTE,** utilisé pour capturer l'énergie solaire et la transformer en énergie calorifique, fonctionnant à basse-moyenne ou haute température et constitué principalement d'un absorbeur (4), un couvercle transparent extérieur (1) et un matériau isolant thermique transparent entre le couvercle transparent extérieur (1) et l'absorbeur (4), **caractérisé en ce que** l'isolation thermique transparente comprend au moins les couches suivantes :
- une couche d'aérogel de silice transparent (7) la plus proche de l'absorbeur (4) ; et
- une couche de matériau d'isolation à structure alvéolaire transparente (2) constituée de verre ou de polymère transparent, la plus proche du couvercle (1).

2. **CAPTEUR THERMIQUE SOLAIRE AVEC ISOLATION TRANSPARENTE,** selon la revendication 1, **caractérisé en ce que** le capteur thermique solaire est un capteur solaire plat (10).

3. **CAPTEUR THERMIQUE SOLAIRE AVEC ISOLATION TRANSPARENTE,** selon la revendication 1, **caractérisé en ce que** le capteur thermique solaire est un capteur solaire à concentration (11).

4. **CAPTEUR THERMIQUE SOLAIRE AVEC ISOLATION TRANSPARENTE,** selon les revendications précédentes, **caractérisé en ce que**, entre les deux couches d'isolation thermique transparentes, est placé un espace de confinement d'air ou de vide (16), constitué d'une chambre à air (3) ou à vide (9), séparé (16) du matériau d'isolation transparent (2) par un séparateur transparent (6), bien que la couche susmentionnée ne soit pas nécessaire si la couche d'aérogel de silice (7) est de type monolithique.

5. **CAPTEUR THERMIQUE SOLAIRE AVEC ISOLATION TRANSPARENTE,** selon la revendication 1, **caractérisé en ce que** la structure alvéolaire de la couche constituée du matériau isolant susmentionné (2) comporte peu de matériau isolant de structure alvéolaire transparente, constitué de verre ou de polymère transparent avec une fraction en volume de matériau égale ou inférieure à 1%.

6. **CAPTEUR THERMIQUE SOLAIRE AVEC ISOLATION TRANSPARENTE,** selon la revendication 3, **caractérisé en ce que** l'isolation thermique transparente est appliquée à la cavité de réception (14) d'une tour solaire (13).

7. **CAPTEUR THERMIQUE SOLAIRE AVEC ISOLATION TRANSPARENTE,** selon les revendications précédentes 1, 4, 5 et 6, **caractérisé en ce que** les matériaux isolants thermiques, l'aérogel de silice transparent (7), le matériau d'isolation à structure alvéolaire transparente (2) et les espaces de confinement d'air ou de vide (16), sont d'une épaisseur suffisante pour éviter que chaque type de matériau n'atteigne la température maximale admissible de fonctionnement dans des conditions de stagnation, l'aérogel de silice transparent (7) résistant à des températures plus élevées que le matériau à structure alvéolaire transparent (2).

8. **CAPTEUR THERMIQUE SOLAIRE AVEC ISOLATION TRANSPARENTE,** selon les revendications précédentes, **caractérisé en ce que** les côtés et l'arrière du capteur sont isolés avec des couches opaques (5), et que lesdites couches opaques peuvent être remplacées par des couches de matériau aérogel de silice (7).

9. « **CAPTEUR THERMIQUE SOLAIRE AVEC ISOLATION TRANSPARENTE** », selon les revendications précédentes 1, 4 et 7, **caractérisé en ce que** le matériau de la couche d'aérogel de silice (7) peut être de l'aérogel de silice ou du xérogel de silice, tous deux transparents, et présentés sous forme granulaire ou monolithique.

10. « **CAPTEUR THERMIQUE SOLAIRE AVEC ISOLATION TRANSPARENTE** », selon la revendication 9, **caractérisé en ce que** lorsque la couche d'isolation en aérogel de silice ou en xérogel de silice transparents (7) est sous forme granulaire, il y aura une ou plusieurs couches séparatrices au-dessus et/ou en dessous de ce (7) séparateur transparent (6).
